Europäisches Patentamt

European Patent Office

Office européen des brevets

(19)

(11) **EP 1 477 383 B1**

(12)     **EUROPÄISCHE PATENTSCHRIFT**

(45) Veröffentlichungstag und Bekanntmachung des Hinweises auf die Patenterteilung:
**12.01.2005  Patentblatt 2005/02**

(51) Int Cl.$^7$: **B61L 25/02**

(21) Anmeldenummer: **03291063.0**

(22) Anmeldetag: **28.04.2003**

(54) **Verfahren und Vorrichtung zur Gleichtaktfehlererkennung**

Method and apparatus for pulse train common mode error detection

Méthode et dispositif pour la détection des erreurs de mode commune dans une succession d'impulsion

(84) Benannte Vertragsstaaten:
**AT BE BG CH CY CZ DE DK EE ES FI FR GB GR HU IE IT LI LU MC NL PT RO SE SI SK TR**

(43) Veröffentlichungstag der Anmeldung:
**17.11.2004  Patentblatt 2004/47**

(73) Patentinhaber: **ALCATEL**
**75008 Paris (FR)**

(72) Erfinder:
• **Gebert, Thomas**
  **74626 Bretzfeld (DE)**

• **Lauterberg, Dr. Veit**
  **70736 Fellbach (DE)**

(74) Vertreter: **Menzietti, Domenico, Dipl.-Ing et al**
**Alcatel**
**Intellectual Property Department, Stuttgart**
**70430 Stuttgart (DE)**

(56) Entgegenhaltungen:
**DE-A- 10 139 102        US-A- 4 969 695**
**US-A1- 2001 032 500**

Anmerkung: Innerhalb von neun Monaten nach der Bekanntmachung des Hinweises auf die Erteilung des europäischen Patents  kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft ein Verfahren zur Gleichtaktfehlererkennung. Das Verfahren ist insbesondere geeignet zur Gleichtaktfehlererkennung in Zugsicherungssystemen und speziell für (Weg-)Impulsgeber in einer SDMU Geschwindigkeits- und wegmeßeinheit).

Zugsicherungssysteme bilden einen wesentlichen Bestandteil der Eisenbahnsicherungstechnik. Moderne Zugsicherungssysteme erlauben dem Triebfahrzeugführer die erweiterte Vorausschau (elektrische Sicht) über eine große Distanz der vor ihm liegenden Strecke und sind somit Voraussetzung für den Hochgeschwindigkeitsverkehr. Die Zugsicherungssysteme und die beteiligten Komponenten übernehmen dabei Sicherheitsverantwortung. Eine wesentliche Komponente ist dabei die SDMU Geschwindigkeits- und wegmeßeinheit).

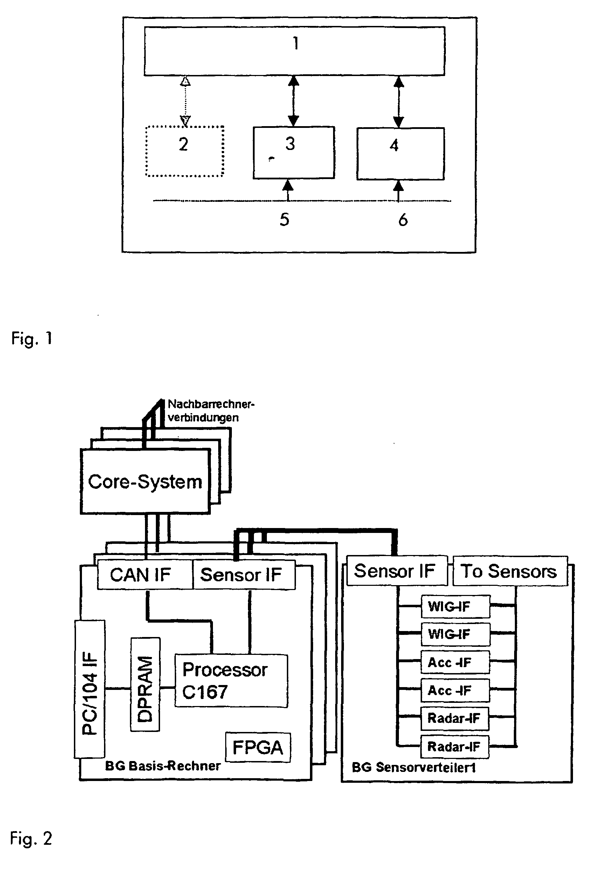

Fig. 1 zeigt die Einbindung einer SDMU 3 in den modularen Aufbau einer Zugsicherung. Auf dem Triebfahrzeug eines Zuges (ICE, TGV, S-Bahn, U-Bahn, usw.) sind verschiedene on-board Einheiten angeordnet. In einer ersten Einheit 1 werden die zentralen Zugsicherungsfunktionen bearbeitet. Einheit 1 hat mehrere Schnittstellen zu anderen modular aufgebauten Einheiten, darunter die SDMU 3, einer Einheit 4 zur Ortungsreferenz und anderen Komponenten 2. SDMU 3 und Einheit 4 haben zudem jeweils ein oder mehrere Schnittstellen zu entlang den Schienen angeordneten Referenzpunkten. Für die Ortungsreferenz sind dies abhängig von der Systemarchitektur im Falle von LZB (Linienzugbeeinflussung) z.B. Kreuzungsstellen und im Falle von ETCS (European Train Control System) Balisen.

Die Aufgabe der SDMU besteht in der relativen Wegmessung (Feinortung) zur jeweils gültigen Ortsreferenz und der Geschwindigkeitsmessung. Diese Daten müssen von der SDMU sicher ermittelt werden. Die Sicherheit der Weg- und Geschwindigkeitsinformation wird durch Angabe jeweils eines Vertrauensintervalls um den Nominalwert (Schätzwert) für den Weg und die Geschwindigkeit erreicht; der wirkliche Wert (Ist- Wert) muss mit definiert hoher Wahrscheinlichkeit innerhalb dieses Intervalls liegen. Weiter hat die SDMU die Aufgabe der Beschleunigungsermittlung, der sicheren relativen Fahrtrichtungserkennung und der sicheren Stillstandsermittlung.

Fig. 2 zeigt eine Übersicht über die Hardware-Komponenten einer SDMU.

Die SDMU beinhaltet 3 parallele, unabhängige SDMU-Rechner (Basisrechner) zur Vorverarbeitung und einen übergeordneten, sicheren Rechner mit Voter. Als sicherer Rechner wird das Core-System eingesetzt. Als Sensoren können Dopplerradar (Radar), Wegimpulsgeber (WIG) und Beschleunigungsmesser (Acc) eingesetzt werden. Für zukünftige Anwendungen kann ebenso GPS, eine Inertialplattform, etc. eingesetzt werden.

Alle SDMU-Rechner greifen über die Baugruppe (BG) Sensorverteiler auf die Sensordaten derselben Sensoren zu und ermitteln daraus unabhängig von den anderen SDMU-Rechnern die Weg- und Geschwindigkeitsinformation und das Vertrauensintervall für Weg und Geschwindigkeit. Die SDMU-Rechner haben keinen Datenaustausch untereinander. Die Weg- und Geschwindigkeitsinformation und die Vertrauensintervalle für Weg und Geschwindigkeit werden 3-kanalig an den sicheren Rechner (Core-System) weitergegeben.

Die Baugruppe (BG) Basis-Rechner ist im Europakartenformat aufgebaut und besitzt ein oder mehrere Schnittstellen (IF) zum Sensorverteiler. Sie sammelt die Sensorrohdaten, berechnet je nach Ausführung der SDMU die Odometriedaten und kommuniziert mit dem sicheren Fahrzeugrechner. Der Basis-Rechner ist für die Bearbeitung schneller Ein-/Ausgabe-Operationen optimiert. Er beinhaltet dazu z.B. einen Prozessor (Processor C167), einen Speicher (DPRAM=Dual Port Random Access Memory), ein FPGA (=Free Programmable Gate Array) sowie eine Schnittstelle (CAN IF) zum Core-System und gegebenenfalls ein oder mehr weitere Schnittstellen (PC/104 IF) zu Personalcomputern, etc.

Es sind ein oder zwei Sensorverteilerbaugruppen vorgesehen, die im Europakartenformat aufgebaut sind, mit Zuführung der Signale von den Sensoren über das Backpanel. Die Sensorsignale werden abhängig vom Sensortyp auf einen einheitlichen Pegel umgesetzt. Damit ist gewährleistet, dass Änderungen in den Sensoren immer nur auf die Sensorverteilerbaugruppen begrenzt bleiben und keine Auswirkungen auf den Basis-Rechner haben.

Ausgangssignale von Impulsgebern mit zwei Systemen können fehlerbehaftet sein.

Aus DE 101 39 102 A 1 ist ein Verfahren zur Ueberwachung der Funktionsfaehigkeit einer Fahrzeugbremse bekannt, bei dem die Funktionsfaehigkeit auf der Grundlage einer Raddrehzahldifferenz ueberwacht wird. Waehrend eines Bremsvorgangs wird die Raddrehzahl eines der zu ueberwachenden Fahrzeugbremse zugeordneten Rades gemessen und mit einer an einem anderen gebremsten Rad orientierten Referenzdrehzahl verglichen. Die Drehzahldifferenz zwischen der gemessenen Raddrehzahl und der Referenzdrehzahl wird dann als Kriterium zur Beurteilung der Funktionsfaehigkeit der Fahrzeugbremse verwendet.

Aufgabe der Erfindung ist es, ein Verfahren zur Überwachung und Fehleroffenbarung von Impulsgebern bereitzustellen.

Gelöst wird die Aufgabe durch ein Verfahren gemäß Patentanspruch 1.

Das erfindungsgemäße Verfahren zur Gleichtaktfehlererkennung für einen Impulsgeber mit zwei oder mehr Systemen weist folgende Schritten für jeweils zwei Systeme auf: Ermittlung des zeitlichen Versatzes zwischen zwei zeitlich aufeinander folgenden oder gleichzeitig auftretenden Flanken von Impulsen der beiden Systeme, Vergleich des ermittelten zeitlichen Versatzes mit einem zeitlichen Minimalversatz, Registrieren eines Gleichtaktfehlers im Falle, dass der Vergleich ergibt, dass der ermittelte zeitliche Versatz geringer ist als der zeitliche Minimalversatz.

Der Impulsgeber ist z.B. ein Wegimpulsgeber oder ein Hallgeber. Das erfindungsgemäße Verfahren kann auf jeweils zwei Systemen/Spuren separat angewendet werden, so dass eine Mehrfachanwendung möglich ist für den Fall, dass alle Spuren überwacht werden sollen. Die Implementierung des Verfahrens ist durch Hardware, Software oder Hardware + Software möglich.

In einer Ausgestaltung der Erfindung erfolgt die Ermittlung des zeitlichen Versatzes mittels eines Zählers, der gestartet wird wenn eine Flanke eines Impulses des einen Systems von 1 auf 0 empfangen wird und gestoppt wird wenn eine Flanke eines Impulses des anderen Systems von 1 auf 0 empfangen wird.

Alternativ kann der Zähler auch gestartet werden wenn eine Flanke eines Impulses des einen Systems von 0 auf 1 empfangen wird und gestoppt werden wenn eine Flanke des Impulses des anderen Systems von 0 auf 1 empfangen wird.

In einer weiteren Variante kann der Zähler auch gestartet werden wenn eine Flanke eines Impulses des einen Systems von 0 auf 1 empfangen wird und gestoppt werden wenn eine Flanke des Impulses des anderen Systems von 1 auf 0 empfangen wird.

In einer weiteren Variante kann der Zähler auch gestartet werden wenn eine Flanke eines Impulses des einen Systems von 1 auf 0 empfangen wird und gestoppt werden wenn eine Flanke des Impulses des anderen Systems von 0 auf 1 empfangen wird.

Zusätzlich kann auch ein zweiter Zähler vorhanden sein, der gestartet wird wenn eine Flanke eines Impulses des einen Systems von 0 auf 1 empfangen wird und gestoppt wird wenn eine Flanke des Impulses des anderen Systems von 0 auf 1 empfangen wird, und wenn der erste Zähler gestartet wird, wenn eine Flanke eines Impulses des einen Systems von 1 auf 0 empfangen wird und gestoppt wird, wenn eine Flanke des Impulses des anderen Systems von 1 auf 0 empfangen wird, so dass fortlaufend die gesamte empfangene Pulsfolge überwacht wird. Für jeden Zähler wird jeweils ein Vergleich des ermittelten zeitlichen Versatzes mit einem zeitlichen Minimalversatz durchgeführt sowie ein Registrieren eines Gleichtaktfehlers im Falle, dass der Vergleich ergibt, dass der ermittelte zeitliche Versatz geringer ist als der zeitliche Minimalversatz.

Gegebenenfalls können für zwei Systeme auch vier Zähler vorhanden sein, um alle vier Flankenwechsel (1 auf 0 System 1 zu 1 auf 0 System 2; 1 auf 0 System2 zu 0 auf 1 System 1; 0 auf 1 System 1 zu 0 auf 1 System 2; 0 auf 1 System2 zu 1 auf 0 System 1) zu überwachen.

In einer weiteren Ausgestaltung wird der zeitliche Minimalversatz berechnet aus den Parametern minimaler Phasenversatz des Impulsgebers, minimaler Raddurchmesser, maximale Fahrzeuggeschwindigkeit, maximale Anzahl Wegimpulse pro Radumdrehung. Insbesondere wird der zeitliche Minimalversatz berechnet aus (minimaler Phasenversatz des Impulsgebers x minimaler Raddurchmesser x Pi) / (maximale Fahrzeuggeschwindigkeit x maximale Anzahl Wegimpulse pro Radumdrehung x 360°).

Durch die Verwendung der Parameter kann zum einen der zeitliche Minimalversatz für jeden Zug individuell festgelegt werden. Zum anderen kann während der Fahrt für verschiedene zu überwachende Impulse jeweils ein on-board variierter, z.B. an die Fahrzeuggeschwindigkeit angepasster zeitlicher Minimalversatz ermittelt werden. Je genauer der zeitliche Minimalversatz, desto mehr Störimpulse können registriert werden. Anstelle einer on-line Berechnung kann der zeitliche Minimalversatz selbst als einstellbarer Parameter ausgeführt sein, der z.B. bei der Installation der on-board Zugeinrichtungen oder der SDMU programmiert wird.

In einer weiteren Ausgestaltung des Verfahrens wird der zeitliche Minimalversatz berechnet aus (minimaler Phasenversatz des Impulsgebers x aktuelle Periodendauer) / 360°. Anstelle der aktuellen Periodendauer kann auch die Periodendauer des zuletzt empfangenen Impulses oder die Periodendauer des vorletzten Impulses jeweils abzüglich eines Wertes, der eine maximal mögliche zwischenzeitliche Erhöhung der Drehzahl berücksichtigt, als Referenz verwendet werden.

In einer weiteren Ausgestaltung ist das erfindungsgemäße Verfahren dadurch gekennzeichnet, dass alle zeitlichen Versätze zwischen zeitlich aufeinander folgenden Flanken von Impulsen der beiden Systeme ermittelt werden, jeder ermittelte zeitliche Versatz mit einem zeitlichen Minimalversatz verglichen wird, wobei der Wert des zeitlichen Minimalversatzes von Vergleich zu Vergleich variieren kann, und ein Gleichtaktfehler registriert wird im Falle, dass der Vergleich ergibt, dass der ermittelte zeitliche Versatz geringer ist als der zeitliche Minimalversatz. Durch das adaptive Nachführen und Anpassen des zeitlichen Minimalversatzes, z.B. an die aktuelle Geschwindigkeit, kann eine genauere Gleichtaktüberwachung erfolgen.

Ein erfindungsgemäßes FPGA mit einem speziellen Programm zur Gleichtaktfehlererkennung für einen Impulsgeber mit zwei oder mehr Systemen, beinhaltet Anweisungen zur Ermittlung des zeitlichen Versatzes zwischen zwei zeitlich aufeinander folgenden Flanken von Impulsen der beiden Systeme, zum Vergleich des ermittelten zeitlichen Versatzes mit einem zeitlichen Minimalversatz und zum Registrieren eines Gleichtaktfehlers im Falle, dass der Vergleich ergibt, dass der ermittelte zeitliche Versatz geringer ist als der zeitliche Minimalversatz.

Ein erfindungsgemäßes Computerprogrammprodukt zur Gleichtaktfehlererkennung für einen Impulsgeber mit zwei oder mehr Systemen, beinhaltet Anweisungen zur Ermittlung des zeitlichen Versatzes zwischen zwei zeitlich aufeinander folgenden Flanken von Impulsen der beiden Systeme, zum Vergleich des ermittelten zeitlichen Versatzes mit einem zeitlichen Minimalversatz und zum Registrieren eines Gleichtaktfehlers im Falle, dass der Vergleich ergibt, dass der ermittelte zeitliche Versatz geringer ist als der zeitliche Minimalversatz.

Die Anweisungen sind beispielsweise in der Programmiersprache C++ geschrieben.

Das Computerprogrammprodukt kann auf einem Datenträger gespeichert sein, z.B. CD-ROM.

Welche Funktionen im FPGA und welche durch ein Computerprogrammprodukt realisiert sind ist für die Implementierung der Erfindung unerheblich. Insofern ist auch eine Kombination aus beiden möglich. Die Erfindung kann infolgedessen auch aus einer Kombination aus Hard- und Software realisiert sein.

Eine erfindungsgemäße SDMU mit mindestens zwei Basisrechnern, wobei jeder Basisrechner mindestens einen Prozessor und/oder ein FPGA beinhaltet, ist dadurch gekennzeichnet, dass jeder Prozessor und/oder jedes FPGA mit einem speziellen Programm geladen ist, das Anweisungen beinhaltet zur Ermittlung des zeitlichen Versatzes zwischen zwei zeitlich aufeinander folgenden Flanken von Impulsen von zwei Systemen, zum Vergleich des ermittelten zeitlichen Versatzes mit einem zeitlichen Minimalversatz und zum Registrieren eines Gleichtaktfehlers im Falle, dass der Vergleich ergibt, dass der ermittelte zeitliche Versatz geringer ist als der zeitliche Minimalversatz.

Eine erfindungsgemäße Vorrichtung zur Gleichtaktfehlererkennung für einen Impulsgeber mit zwei oder mehr Systemen, beinhaltet einen Zähler und eine Auswerteschaltung, wobei der Zähler den zeitlichen Versatz zwischen zwei zeitlich aufeinander folgenden Flanken von Impulsen von zwei Systemen ermittelt und die Auswerteschaltung den ermittelten zeitlichen Versatz mit einem zeitlichen Minimalversatz vergleicht und einen Gleichtaktfehler registriert im Falle, dass der Vergleich ergibt, dass der ermittelte zeitliche Versatz geringer ist als der zeitliche Minimalversatz.

Der Zähler ist z.B. in Software oder Hardware realisiert. Die Auswerteschaltung ist z.B. in Software und/oder Hardware realisiert. Sie beinhaltet z.B. einen Prozessor oder einen Teil davon, z.B. einen Teil des bereits in einem Basisrechner einer SDMU vorhandenen Prozessors, einen Vergleicher, z.B. Komparator, Schaltungslogik und/oder Softwareanweisungen.

In einer besonderen Ausgestaltung der Erfindung wird die Gleichtaktfehlererkennung zusätzlich zu einer anderen Fehlererkennung und/oder Überwachung für einen Impulsgeber durchgeführt, z.B. einer Pulsbreitenerkennung und/oder einer Pulsfolgeflhlererkennung.

Vorteilhafte Ausgestaltungen der Erfindung sind den abhängigen Ansprüchen und der nachfolgenden Beschreibung zu entnehmen.

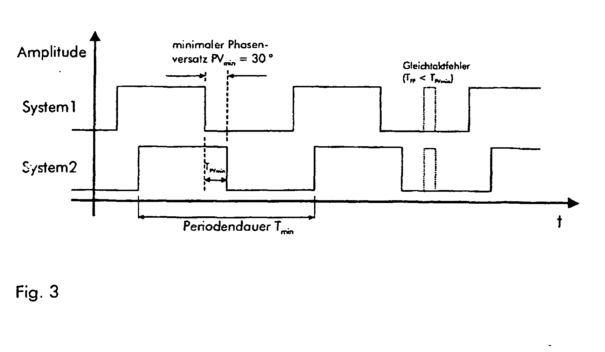

Im folgenden wird ein Ausführungsbeispiel der Erfindung unter Zuhilfenahme von Figur 3 erläutert.

Fig. 3 zeigt ein Diagramm mit Amplituden der Signale von zwei Systemen eines Impulsgebers.

Bei der Gleichtaktfehlererkennung wird die Zeit $T_{FF}$ zwischen einer Flanke beliebiger Polarität auf dem einen System/Spur und der nächsten Flanke beliebiger Polarität auf dem(n) anderen System(en) gemessen und geprüft, ob die minimale Zeit $T_{PVmin}$ unterschritten wurde.

Fig. 3 zeigt den minimalen Phasenversatz des Impulsgebers $PV_{min}$ und ein Beispiel eines Gleichtaktfehlers bei dem $T_{FF} = 0$ ist.

Der minimale Phasenversatz $PV_{min}$ der zwei Systeme/Spuren eines Wegimpuls- /Hallgebers wird in den Herstellerspezifikationen angegeben. Die minimale Periodendauer $T_{min}$ tritt bei maximaler Geschwindigkeit bzw. Drehzahl auf.

Da $PV_{min}$ niemals unterschritten werden darf, gilt für beliebige Periodendauern $T \geq T_{min}$ ein minimaler zeitlicher Versatz (zeitlicher Minimalversatz) $T_{Pvmin}$:

$$T_{PVmin} = PV_{min}/360° * T_{min}$$

Alle Flanken mit einem zeitlichen Abstand von $T_{PVmin}$ und weniger müssen durch Fehler oder Störungen im Wegimpuls- /Hallgeber, den Verbindungsleitungen oder den Stromversorgungen (Spikes auf der Spannungsversorgung) verursacht worden sein.

$PV_{min}$ beträgt üblicherweise mindestens 30 °($T_{PVmin}$ = 1/12 $T_{min}$), um eine sichere Funktion und Fahrtrichtungserkennung zu gewährleisten.

Beispielhafte Berechnung der minimalen Zeit $T_{PVmin}$ für minimalen Raddurchmesser, maximale Geschwindigkeit und maximale Anzahl Wegimpulse pro Radumdrehung:

Vorgaben:

minimaler Phasenversatz des Impulsgebers $\quad PV_{min} = 30° (T_{PVmin} = 1/12\ T_{min})$

minimaler Raddurchmesser $RD_{min}$ = 0,700 m

maximale Fahrzeuggeschwindigkeit $V_{max}$ = 500 km/h = 138,89 m/s

maximale Anzahl Wegimpulse pro Radumdrehung $I_{max}$ = 200

Die maximale Wegimpuls- / Hallgeberfrequenz wird berechnet aus:

$$WIG\ f_{max} = I_{max} * v_{max} / (RD_{min} * \pi) = 12631\ Hz$$

Daraus resultiert die minimale Periodendauer $T_{min}$ des Wegimpuls-/Hallgebersignales eines Systems/Spur:

$$T_{min} = 1/ WIG\ f_{max} = (RD_{min} * \pi) / (v_{max} * I_{max}) = 79,17\ \mu s$$

Folglich resultiert $T_{min}$ aus $T_{PVmin}$ bei der Annahme einer minimalen Überlappung von 30° der (beiden) Systeme/Spuren:

$$T_{PVmin} = 1 /12\ T_{min}$$

$$T_{PVmin} = 6,6\ \mu s$$

Die Gleichtaktfehlererkennung signalisiert einen Fehler, wenn Signalflanken der (beiden) Systeme/Spuren eines Wegimpulsgebers einen geringeren Abstand als 6,6 $\mu s$ zueinander besitzen.

Beispiel für die Realisierung in einer SDMU:

Die in der SDMU in einem FPGA realisierte Gleichtaktfehlererkennung erkennt einen Gleichtaktfehler bei Flanken mit einem Abstand kleiner als 6,4 $\mu s$ auf den beiden Systemen/Spuren. Die Überwachung auf einen Gleichtaktfehler erfolgt immer, d. h. auch bei Stillstand wird geprüft, ob gleichzeitige Impulse auf beiden Systemen/Spuren auftreten. Bei jeder Wegimpulsflanke eines Systems/Spur wird ein mit einer hohen Frequenz getakteter Zähler (Auflösung 200 ns) gestartet. Wenn innerhalb von 6,4 $\mu s$ eine weitere Flanke auf einem anderen System/Spur auftritt, wird ein Gleichtaktfehler erkannt. Die Überwachung auf 6,4 $\mu s$ ($2^5 * 200$ ns) wurde aus Gründen der einfacheren Realisierung gewählt.

Eine Verbesserung der Gleichtaktfehlererkennung kann erreicht werden, wenn der Wert für $T_{PVmin}$ aus den vier Parametern $PV_{min}$ (minimaler Phasenversatz des Impulsgebers), $RD_{min}$ (minimaler Raddurchmesser), $v_{max}$ (maximale Fahrzeuggeschwindigkeit) und $I_{max}$ (maximale Anzahl Wegimpulse pro Radumdrehung) berechnet und als Parameter an die Gleichtaktfehlererkennung übergeben wird.

Eine weitere Verbesserung kann erzielt werden, wenn laufend die aktuelle Periodendauer T übergeben wird, und daraus $T_{PV}$ bestimmt wird. Wenn die aktuelle Periodendauer nicht vorhanden ist, kann statt dessen die letzte Periodendauer T abzüglich eines Wertes für die maximal mögliche Erhöhung der Drehzahl übergeben werden:

$$T_{PV} = PV_{min}/360° * T.$$

**Patentansprüche**

1. Verfahren zur Gleichtaktfehlererkennung für einen Impulsgeber mit zwei oder mehr Systemen, mit folgenden Schritten für jeweils zwei Systeme: Ermittlung des zeitlichen Versatzes zwischen zwei zeitlich aufeinander folgenden oder gleichzeitig auftretenden Flanken von Impulsen der beiden Systeme, Vergleich des ermittelten zeitlichen Phasenversatzes mit einem zeitlichen Minimalversatz, Registrieren eines Gleichtaktfehlers im Falle, dass der Vergleich ergibt, dass der ermittelte zeitliche Versatz geringer ist als der Minimalversatz.

2. Verfahren gemäß Patentanspruch 1, **dadurch gekennzeichnet, dass** die Ermittlung des zeitlichen Versatzes mittels eines Zählers erfolgt, der gestartet wird wenn eine Flanke eines Impulses des einen Systems empfangen wird und gestoppt wird wenn eine Flanke eines Impulses des anderen Systems von empfangen wird.

3. Verfahren gemäß Patentanspruch 1, **dadurch gekennzeichnet, dass** der zeitliche Minimalversatz berechnet wird aus den Parametern minimaler Phasenversatz des Impulsgebers, minimaler Raddurchmesser, maximale Fahrzeuggeschwindigkeit, maximale Anzahl Wegimpulse pro Radumdrehung.

4. Verfahren gemäß Patentanspruch 1, **dadurch gekennzeichnet, dass** der zeitliche Minimalversatz berechnet wird aus (minimaler Phasenversatz des Impulsgebers x minimaler Raddurchmesser x Pi) / (maximale Fahrzeuggeschwindigkeit x maximale Anzahl Wegimpulse pro Radumdrehung x 360°).

5. Verfahren gemäß Patentanspruch 1, **dadurch gekennzeichnet, dass** der zeitliche Minimalversatz berechnet wird aus (minimaler Phasenversatz des Impulsgebers x aktuelle Periodendauer) / 360°.

6. Verfahren gemäß Patentanspruch 1, **dadurch gekennzeichnet, dass** alle zeitlichen Versätze zwischen zeitlich aufeinander folgenden oder gleichzeitig auftretenden Flanken von Impulsen der beiden Systeme ermittelt werden, jeder ermittelte Versatz mit einem zeitlichen Minimalversatz verglichen wird, wobei der Wert des zeitlichen Minimalversatzes von Vergleich zu Vergleich variieren kann, und ein Gleichtaktfehler registriert wird im Falle, dass der Vergleich ergibt, dass der ermittelte zeitliche Versatz geringer ist als der zeitliche Minimalversatz.

7. Frei programmierbares Gate Array oder Prozessor mit einem speziellen Programm zur Gleichtaktfehlererkennung für einen Impulsgeber mit zwei oder mehr Systemen, das Anweisungen beinhaltet zur Durchfuehrung des Verfahrens gemaess Patentanspruch 1.

8. Computerprogrammprodukt zur Gleichtaktfehlererkennung für einen Impulsgeber mit zwei oder mehr Systemen, beinhaltend Anweisungen zur Durchfuehrung des Verfahrens gemaess Patentanspruch 1.

9. Geschwindigkeits- und wegmeßeinheit mit mindestens zwei Basisrechnern, wobei jeder Basisrechner mindestens einen Prozessor und/oder einem frei programmierbaren Gate Array beinhaltet, **dadurch gekennzeichnet, dass** jeder Prozessor und/oder jedes Free Programmable Gate Array mit einem speziellen Programm geladen ist, das Anweisungen beinhaltet zur Durchfuehrung des Verfahrens gemaess Patentanspruch 1.

10. Vorrichtung zur Gleichtaktfehlererkennung für einen Impulsgeber mit zwei oder mehr Systemen, beinhaltend einen Zähler und eine Auswerteschaltung, wobei der Zähler den zeitlichen Versatz zwischen zwei zeitlich aufeinander folgenden oder gleichzeitig auftretenden Flanken von Impulsen von zwei Systemen ermittelt und die Auswerteschaltung den ermittelten zeitliche Versatz mit einem zeitlichen Minimalversatz vergleicht und einen Gleichtaktfehler registriert im Falle, dass der Vergleich ergibt, dass der ermittelte zeitliche Versatz geringer ist als der zeitliche Minimalversatz.

## Claims

1. Method for common-mode error detection for a pulse generator with two or more systems, with the following steps for two systems in each case: Determination of the time offset between two pulse edges of the two systems occurring successively or simultaneously, comparison of the recorded time phase offset with a minimum time offset, registering of a common-mode error in the event that the comparison shows that the recorded time offset is less than the minimum time offset.

2. Method according to Claim 1, **characterized in that** the time offset is determined by means of a counter, which is started when an edge of a pulse of the one system is received, and stopped when an edge of a pulse of the other system is received.

3. Method according to Claim 1, **characterized in that** the minimum time offset is calculated from the parameters minimum phase offset of the pulse generator, minimum wheel diameter, maximum vehicle speed, maximum number of distance pulses per wheel revolution.

4. Method according to Claim 1, **characterized in that** the minimum time offset is calculated from (minimum phase offset of the pulse generator x minimum wheel diameter x pi) / (maximum vehicle speed x maximum number of distance pulses per wheel revolution x 360°).

5. Method according to Claim 1, **characterized in that** the minimum time offset is calculated from (minimum phase offset of pulse generator x current period length) / 360°.

6. Method according to Claim 1, **characterized in that** all time offsets between successive or simultaneously occurring edges of pulses of the two systems are determined, each recorded offset is compared with a minimum time offset, the value of this minimum time offset being variable from comparison to comparison, and a common-mode error is registered in the event that the comparison shows that the recorded time offset is less than the minimum time offset.

7. Freely programmable gate array or processor with a special program for common-mode error detection for a pulse generator with two or more systems, which contains instructions for executing the method according to Claim 1.

8. Computer program product for common-mode error detection for a pulse generator with two or more systems, containing instructions for executing the method according to Claim 1.

9. Speed and Distance Measurement Unit with a least two base computers, each base computer including at least one processor and/or one freely programmable gate array, **characterized in that** each processor and/or each freely programmable gate array is loaded with a special program containing instructions for executing the method according to Claim 1.

10. A device for common-mode error detection for a pulse generator with two or more systems, containing a counter and an evaluation circuit, the counter determining the time offset between two successively or simultaneously occurring edges of pulses of two systems, and the evaluation circuit comparing the recorded time offset with a minimum time offset and registering a common-mode error in the event that the comparison shows that the recorded time offset is less than the minimum time offset.


**Revendications**

1. Procédé de détection des erreurs de mode commun pour un émetteur d'impulsions avec deux ou plusieurs systèmes, avec les étapes suivantes pour deux systèmes à chaque fois : détermination du décalage temporel entre deux flancs d'impulsions des deux systèmes survenant successivement ou en même temps, comparaison du décalage temporel de phases déterminé avec un décalage temporel minimal, enregistrement d'une erreur de mode commun dans le cas où la comparaison indique que le décalage temporel déterminé est inférieur au décalage minimal.

2. Procédé selon la revendication 1, **caractérisé en ce que** la détermination du décalage temporel s'effectue au moyen d'un compteur qui est lancé lorsqu'un flanc d'une impulsion de l'un des systèmes est reçu et est arrêté lorsqu'un flanc d'une impulsion de l'autre système est reçu.

3. Procédé selon la revendication 1, **caractérisé en ce que** le décalage temporel minimal est calculé à partir des paramètres du décalage de phases minimal de l'émetteur d'impulsions, du diamètre de roue minimal, de la vitesse maximale du véhicule, du nombre maximal d'impulsions de distance par tour de roue.

4. Procédé selon la revendication 1, **caractérisé en ce que** le décalage temporel minimal est calculé à partir de (décalage de phases minimal de l'émetteur d'impulsions x diamètre de roue minimal x pi) / (vitesse maximale du véhicule x nombre maximal d'impulsions de distance par tour de roue x 360°).

5. Procédé selon la revendication 1, **caractérisé en ce que** le décalage temporel minimal est calculé à partir de (décalage de phases minimal de l'émetteur d'impulsions x période actuelle) / 360°.

6. Procédé selon la revendication 1, **caractérisé en ce que** tous les décalages temporels sont déterminés entre des flancs d'impulsions des deux systèmes survenant successivement ou en même temps, chaque décalage déterminé est comparé avec un décalage temporel minimal, la valeur du décalage temporel minimal pouvant varier de comparaison en comparaison, et une erreur de mode commun est enregistrée dans le cas où la comparaison indique que le décalage temporel minimal déterminé est inférieur au décalage temporel minimal.

7. Réseau prédiffusé programmable par l'utilisateur ou processeur avec un programme spécial destiné à la détection des erreurs de mode commun pour un émetteur d'impulsions avec deux ou plusieurs systèmes, qui contient des instructions en vue de la réalisation du procédé selon la revendication 1.

8. Produit logiciel informatique destiné à la détection des erreurs de mode commun pour un émetteur d'impulsions avec deux ou plusieurs systèmes, contenant des instructions en vue de la réalisation du procédé selon la revendication 1.

9. Unité de mesure de distance et de vitesse avec au moins deux ordinateurs de base, chaque ordinateur de base contenant au moins un processeur et/ou un réseau prédiffusé programmable par l'utilisateur, **caractérisée en ce que** chaque processeur et/ou chaque réseau prédiffusé programmable par l'utilisateur est chargé avec un programme spécial qui contient des instructions en vue de la réalisation du procédé selon la revendication 1.

10. Dispositif de détection des erreurs de mode commun pour un émetteur d'impulsions avec deux ou plusieurs systèmes, contenant un compteur et un circuit d'évaluation, le compteur déterminant le décalage temporel entre deux flancs d'impulsions de deux systèmes survenant successivement ou en même temps et le circuit d'évaluation comparant le décalage temporel déterminé avec un décalage temporel minimal et enregistrant une erreur de mode commun dans le cas où la comparaison indique que le décalage temporel déterminé est inférieur au décalage temporel minimal.

Fig. 1

Fig. 2

Fig. 3